# EUROPÄISCHE PATENTANMELDUNG

(11) **EP 1 161 071 A2**
(43) Veröffentlichungstag der Anmeldung: **05.12.2001**
(21) Anmeldenummer: 01113069.7
(22) Anmeldetag: 29.05.2001
(51) Int. Cl.: H04M 11/04, H04L 12/24

(54) **Verfahren und Vorrichtung zur Fernwartung von Notrufendgeräten**

(30) Priorität: 29.05.2000 DE 10026648
(71) Anmelder: SIEMENS AKTIENGESELLSCHAFT, 80333 München (DE)
(72) Erfinder: Behne, Detlev, 25355 Barmstedt (DE); Herbstritt, Martin, 71272 Renningen (DE); Schulenburg, Jan, 21218 Seevetal (DE)

(57) **Zusammenfassung**

Die vorliegende Erfindung betrifft ein Verfahren und eine Vorrichtung zur Fernwartung, -überwachung und/oder -bedienung von in Notrufanlagen (1), insbesondere Autobahnnotrufanlagen, gruppierten Notrufendgeräten (2), wie Fernsprecheinrichtungen, Notrufsäulen und dergleichen, insbesondere zur Anzeige und Weiterleitung von Alarmmeldungen aus einem Verbund von mehreren in Autobahnnotrufanlagen gruppierten Notrufendgeräten, wobei die Betriebszustände einzelner Notrufanlagen (1) und/oder einzelner Notrufendgeräte (2) über wenigstens eine Kommunikationsverbindung (4,5) seitens einer Ein- und Ausgabeeinrichtung (3,3') erfasst und in vorgebbaren Informationsansichten mittels aus den Betriebszuständen generierter Darstellungselemente in einem Bedien- und Beobachtungsfeld zur Anzeige gebracht werden, wobei wenigstens eine der folgenden Informationsansichten zur Anzeige gebracht wird, und zwar in einer ersten Sicht wenigstens ein Zustand einer Notrufanlage oder eines Notrufendgerätes und/oder in einer zweiten Sicht ein Notrufanlagen- oder Notrufendgeräte-Management und/oder in einer dritten Sicht ein Instandhaltungsbetrieb und/oder in einer vierten Sicht eine Datenbank und/oder in einer fünften Sicht eine Zugangsberechtigung und/oder in einer sechsten Sicht ein Vertretungsbetrieb und/oder in einer siebten Sicht bearbeitete Störmeldungen.

## Beschreibung

Die vorliegende Erfindung betrifft ein Verfahren und eine Vorrichtung zur Fernwartung, -überwachung und/oder -bedienung von in Notrufanlagen, insbesondere Autobahnnotrufanlagen, gruppierten Notrufendgeräten, wie Fernsprecheinrichtungen, Notrufsäulen und dergleichen, insbesondere zur Anzeige und Weiterleitung von Alarmmeldungen aus einem Verbund von mehreren in Autobahnnotrufanlagen gruppierten Notrufendgeräten.

Im Stand der Technik sind Autobahnnotrufanlagen bekannt, wobei verschiedenste Notrufendgeräte, wie beispielsweise Fernsprecheinrichtungen, Notrufsäulen und dergleichen, unter Verwendung von Verstärker-, Adaptions- und Rechnereinrichtungen in hierarchischen Gruppierungen eine Notrufanlage bildend zusammengeschaltet sind. Über ein Kommunikationsnetzwerk sind dabei verschiedene solcher Notrufanlagen miteinander verbindbar, zur Informationsweiterleitung insbesondere über Telekommunikationsnetzwerke mit Polizeistationen, Autobahnmeistereien, sogenannten "Call-Centern" und dergleichen, die beispielsweise seitens der Notrufanlagen Unfall- und/oder Staumeldungen erhalten bzw. ausgeben können. Eine seitens eines Notrufendgerätes gesendete Notrufmeldung ist so seitens verschiedenster Empfänger, d.h. seitens Polizeistationen, Autobahnmeistereien, Call-Centern und dergleichen aus- und verwertbar, beispielsweise zum Einleiten von Soforthilfemaßnahmen und dergleichen.

Die Betreuung entsprechender Notrufanlagen und Notrufendgeräte hinsichtlich Fernwartung, -überwachung und/oder -bedienung fordert einen hohen personellen Aufwand, zum einen aufgrund der Vielzahl der zu betreuenden Notrufanlagen und Notrufendgeräte und zum anderen aufgrund der geforderten Verfügbarkeit rund um die Uhr (24-Stunden).

Vor diesem Hintergrund bestehen Bestrebungen dahingehend, zur Reduzierung der mit dem hohen personellen und technischen Aufwand verbundenen Betreuung von Notrufanlagen und Notrufendgeräten, diese zur Fernwartung, -überwachung und/oder -bedienung zusammenzufassen. Von Nachteil ist dabei, dass aufgrund der Vielzahl der zu betreuenden Notrufanlagen und Notrufendgeräte die Betreuung hinsichtlich Fernwartung,-überwachung und/oder -bedienung unübersichtlich wird, insbesondere dahingehend, dass einzelne Notrufmeldungen, Betriebszustände der Notrufanlagen bzw. der Notrufendgeräte, Wartungszustände, eingeleitete Soforthilfemaßnahmen und dergleichen, von dem entsprechenden Personal nur schwer erfasst und entsprechend bearbeitet werden können.

Der vorliegenden Erfindung liegt in Anbetracht dieses Standes der Technik die Aufgabe zugrunde, ein gattungsgemäßes Verfahren sowie eine gattungsgemäße Vorrichtung dahingehend zu verbessern, dass zusammengeschaltete Notrufanlagen und Notrufendgeräte auf einfache und übersichtliche Art und Weise fernwart-, -überwach- und/oder -bedienbar sind.

Zur technischen Lösung dieser Aufgabe wird mit der Erfindung vorgeschlagen ein Verfahren zur Fernwartung, -überwachung und/oder -bedienung von in Notrufanlagen, insbesondere Autobahnnotrufanlagen, gruppierten Notrufendgeräten, wie Fernsprecheinrichtungen, Notrufsäulen und dergleichen, insbesondere zur Anzeige und Weiterleitung von Alarmmeldungen aus einem Verbund von mehreren in Autobahnnotrufanlagen gruppierten Notrufendgeräten, wobei die Betriebszustände einzelner Notrufanlagen und/oder einzelner Notrufendgeräte über wenigstens eine Kommunikationsverbindung seitens einer Ein- und Ausgabeeinrichtung erfasst und in vorgebbaren Informationsansichten mittels aus den Betriebszuständen generierter Darstellungselemente in einem Bedien- und Beobachtungsfeld zur Anzeige gebracht werden, wobei wenigstens eine der folgenden Informationsansichten zur Anzeige gebracht wird, und zwar in einer ersten Sicht wenigstens ein Zustand einer Notrufanlage oder eines Notrufendgerätes und/oder in einer zweiten Sicht ein Notrufanlagen- oder Notrufendgeräte-Management und/oder in einer dritten Sicht ein Instandhaltungsbetrieb und/oder in einer vierten Sicht eine Datenbank und/oder in einer fünften Sicht eine Zugangsberechtigung und/oder in einer sechsten Sicht ein Vertretungsbetrieb und/oder in einer siebten Sicht bearbeitete Störmeldungen.

Mit dem erfindungsgemäßen Verfahren ist es somit möglich, in Abhängigkeit der vorgegebenen bzw. ausgewählten Informationsansicht die jeweiligen Betriebszustände der Notrufanlagen bzw. Notrufendgeräte in aufbereiteter Form mittels aus den Betriebszuständen generierter Darstellungselemente seitens einer Ein- und Ausgabeeinrichtung zur Anzeige zu bringen. Dadurch lassen sich nahezu beliebig viele Notrufanlagen und Notrufendgeräte seitens einer Ein- und Ausgabeeinrichtung in verschiedenen Informationsansichten mittels der aus den Betriebszuständen generierten Darstellungselemente klar und übersichtlich darstellen, insbesondere der personelle Betreuungsaufwand hinsichtlich Fernwartung, -überwachung und/oder -bedienung minimierbar ist, insbesondere in weniger Ereignis aufwendigen Zeiträumen, beispielsweise Nachtzeiten, Feiertage oder dergleichen.

Gemäß einer vorteilhaften Ausgestaltung der Erfindung umfassen die Darstellungselemente graphische Darstellungssymbole, so dass beispielsweise seitens eines Notrufendgerätes eingehende Notrufmeldungen seitens der Ein- und Ausgabeeinrichtung in dem Bedien- und Beobachtungsfeld mit einem entsprechenden graphischen Symbol dargestellt wird. Der Benutzer kann anhand des Symbols unmittelbar erkennen, welchen Betriebszustand das betreffende Notrufendgerät aufweist und entsprechende Maßnahmen einleiten. Die Verwendung von graphischen Darstellungssymbolen hat darüber hinaus den Vorteil, daß das Bedienpersonal die verschiedenen Betriebszustände der Notrufanlagen bzw. Notrufendgeräte schneller erfassen kann. Mit einer weiteren vorteilhaften Ausgestaltung der Erfindung weisen die Darstellungselemente unterschiedliche Farben auf, so dass die entsprechenden Betriebszustände der Notrufanlagen bzw. Notrufendgeräte voneinander unterscheidbar und seitens des Bedienpersonals noch schneller erfassbar sind, beispielsweise hinsichtlich farbenabhängiger Bearbeitungsprioritäten oder dergleichen.

Gemäß einer weiteren vorteilhaften Ausgestaltung der Erfindung werden in den Informationsansichten Übersichts- und Detailinformationen der Betriebszustände der Notrufanlagen bzw. Notrufendgeräte voneinander getrennt zur Anzeige gebracht. In Abhängigkeit der ausgewählten bzw. vorgegebenen Informationsansicht können so verschiedene Übersichts- und Detailinformationen von Notrufanlagen bzw. Notrufendgeräten angezeigt werden, was eine Betreuung von Notrufanlagen bzw. Notrufendgeräten in einer hierarchischen Struktur bis ins kleinste Detail ermöglicht. Gemäß einer weiteren vorteilhaften Ausgestaltung der Erfindung werden die Betriebszustände in einer Informationsansicht in tabellarischer Form zur Anzeige gebracht wobei vorzugsweise Parameter wie Zustand der Notrufanlagen bzw. Notrufendgeräte umfassend Verstärker, Adaptionseinrichtungen und dergleichen, aktive Notrufendgeräte, Leitungsstörungen der Notrufendgeräte, Verbindungszustand der niederfrequenten Verbindungen (Sprachverbindungen)und der Zustand von Störungsmeldekontakten angezeigt werden.

Gemäß einer weiteren vorteilhaften Ausgestaltung der Erfindung wird eine Fernwartung, -überwachung und/oder -bedienung erst nach Überprüfung einer Zugangsberechtigung ermöglicht, vorteilhafter Weise in Abhängigkeit einer ausgewählten Informationsansicht. Durch die Verwendung einer Zugangsberechtigung wird sichergestellt, dass beispielsweise spezielle Fernwart- und/oder -bedienarbeiten nur von autorisierten Fachkräften durchführbar sind. Diese Maßnahmen sind dabei in vorteilhafter Weise nur in speziellen Informationsansichten durchführbar, welche mittels eines Passwortes geschützt sind.

Mit einer weiteren vorteilhaften Ausgestaltung der Erfindung wird die Kommunikationsverbindung über wenigstens einen Telekommunikationsnetzwerk aufgebaut. Gemäß einer weiteren vorteilhaften Ausgestaltung der Erfindung wird für die Kommunikationsverbindung eine Standleitung verwendet. In einer weiteren besonders vorteilhaften Ausgestaltung der Erfindung wird für die Kommunikationsverbindung eine Twisted-Pair-Verbindung, vorzugsweise unter Verwendung von TCP/IP, eingesetzt, so dass hierüber die Möglichkeit bereitgestellt wird, entsprechende Notrufanlagen und Notrufendgeräte global über das Internet fernzuwarten, fernzuüberwachen und/oder fernzubedienen.

Gemäß einer weiteren vorteilhaften Ausgestaltung der Erfindung ist die Ein- und Ausgabeeinrichtung ein wenigstens eine Anzeigeeinrichtung und wenigstens eine Eingabeeinrichtung umfassender Rechner, vorzugsweise ein PC mit Monitor und Tastatur.

Gemäß einem vorteilhaften Vorschlag der Erfindung werden die Betriebszustände, Wartungs-, Überwachungs- und/oder Bedieneingaben protokolliert, vorzugsweise seitens der Ein- und Ausgabeeinrichtung. Dadurch wird die Möglichkeit geschaffen, festzuhalten, in welchem Rahmen Wartungs- und/oder Parametrierarbeiten an den Notrufendgeräten bzw. Notrufanlagen durchgeführt wurden. Darüber hinaus ist feststellbar, welche Maßnahmen aufgrund welcher Betriebszustände, in welcher Zeit seitens des Bedienpersonals durchgeführt bzw. eingeleitet wurden.

Weitere Einzelheiten, Merkmale und Vorteile der Erfindung werden nachfolgend anhand des in den Figuren dargestellten Ausführungsbeispiels näher erläutert. Dabei zeigen:
- FIG 1: den prinzipiellen Aufbau eines Autobahnnotrufsystems;
- FIG 2: den prinzipiellen Aufbau von in einem Kommunikationsnetzwerk zusammengeschalteten Notrufanlagen und
- FIG 3: die prinzipielle Aufteilung und Darstellung von Betriebszuständen in einer Informationsansicht.

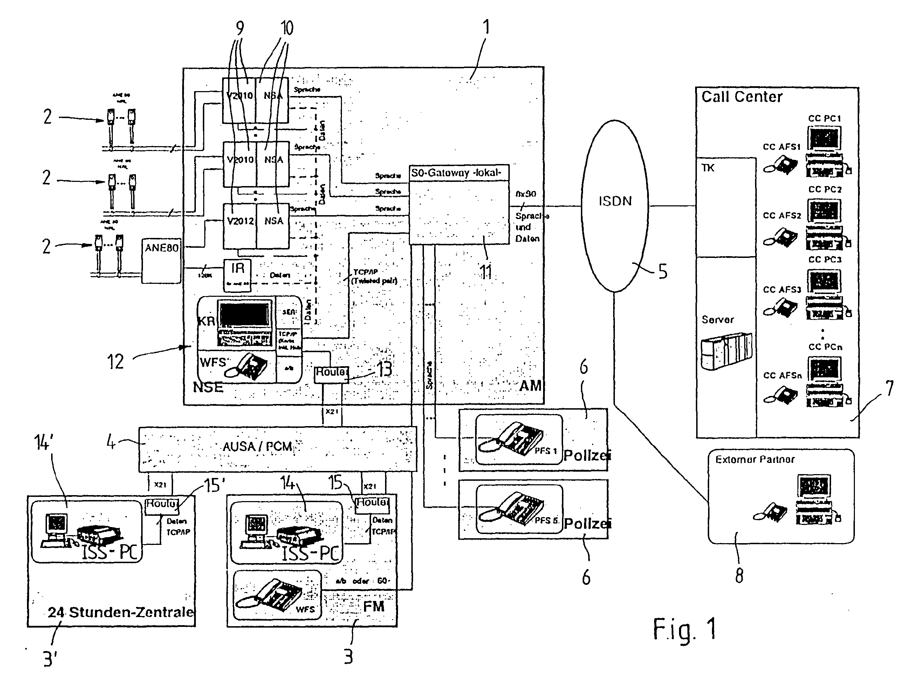

FIG 1 zeigt den prinzipiellen Aufbau eines Autobahnnotrufsystems, umfassend in Notrufanlagen 1 hierarchisch gruppierte Notrufendgeräte 2, Ein- und Ausgabeeinrichtungen 3, 3' zur Fernwartung, -überwachung und/oder -bedienung, Kommunikationsverbindungen 4 und 5 sowie weitere Ausgabeeinrichtungen 6 seitens Polizeistationen, 7 seitens sogenannter Call-Center und 8 seitens weiterer externer Partner, die entsprechende Notrufmeldungen und dergleichen als Serviceleistungen anbieten.

Die Notrufanlagen 1, welche vorliegend seitens einer Autobahnmeisterei (AM) untergebracht sind, weisen zum Anschluss von Notrufendgeräten 2, vorliegend Notrufsäulen, verschiedene Verstärkereinrichtungen 9 und Adaptionsvorrichtungen 10 auf, welche seitens der Notrufanlage 1 über eine Telekommunikationsanlage 11, welche vorliegend ein sogenanntes S0-Getway bereitstellt, und einen Rechner 12 über unterschiedliche Kommunikationsverbindungen 4 und 5, vorliegend eine Standleitung 4 zur Übertragung von Daten im sogenannten X.21-Protokoll über einen sogenannten Router 13 und eine ISDN-Verbindung 5 über ein Telekommunikationsnetzwerk zur Kommunikation mit den Ein- und Ausgabeeinrichtungen 3, 3' bzw. den Ausgabeeinrichtungen 6, 7 und 8 verbindbar ist. Der Rechner 12 ist dabei über eine Twisted-Pair-Verbindung mit der Telekommunikationsanlage 11 unter Verwendung von TCP/IP verbunden. Dadurch können seitens des Rechners von den Notrufendgeräten 2 bzw. der Notrufanlage 1 erfasste Betriebszustände in Form von digitalen Daten der Telekommunikationsanlage 11 und von dieser über die Kommunikationsverbindung 4 bzw. die Kommunikationsverbindung 5 seitens der Ausgabeeinrichtungen 6, 7 und 8 bzw. den Ein- und Ausgabeeinrichtungen 3, 3' zur Verfügung gestellt werden. Entsprechendes gilt für seitens der Notrufendgeräte 2 über die Verstärkereinrichtungen 9 und Adaptionsvorrichtungen 10 in die Telekommunikationsanlage eingespielte Sprachsignale, welche als Betriebszustand die Notrufendgeräte 2 bzw. die Notrufanlage 1 über die Telekommunikationsanlage 11 und die Kommunikationsverbindung 4 bzw. die Kommunikationsverbindung 5 seitens der Ausgabeeinrichtungen 6, 7 und 8 sowie der Ein- und Ausgabeeinrichtungen 3 und 3' zur Anzeige gebracht werden können.

Die Ein- und Ausgabeeinrichtungen 3, 3' umfassen ihrerseits jeweils einen Rechner 14 bzw. 14', welcher über einen Router 15 bzw. 15' über die Kommunikationsverbindung 4 zur Fernwartung, -überwachung und/oder -bedienung mit der Notrufanlage 1 über deren Router 13 und Rechner 12 bzw. der Telekommunikationsanlage 11 verbindbar ist. Dabei werden von den Rechnern 14 bzw. 14' Daten unter Verwendung von TCP/IP über den Router 15 bzw. 15' an die Notrufanlage 1 bzw. die Notrufendgeräte 2 übertragen bzw. von diesen empfangen. Die gesendeten bzw. empfangenen Daten stellen dabei Betriebszustände der Notrufanlage 1 bzw. der Notrufendgeräte 2 dar, welche seitens der Ein- und Ausgabeeinrichtung 3 bzw. 3' in vorgebbaren Informationsansichten mittels aus den Betriebszuständen der Notrufanlagen 1 bzw. der daran gruppiert angeschlossenen Notrufendgeräte 2 Darstellungselemente generiert, welche seitens eines Bedien- und Beobachtungsfeldes der Ein- und Ausgabeeinrichtung 3, 3', vorliegend seitens des Monitors des Rechners 14 bzw. 14', zur Anzeige gebracht werden.

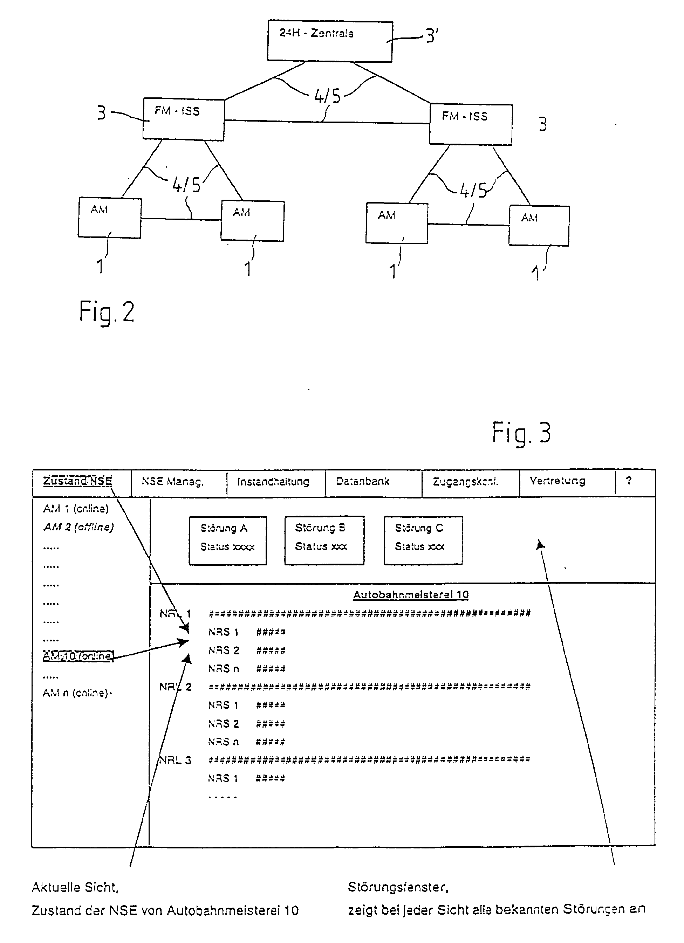

FIG 3 zeigt eine in einem Bedien- und Beobachtungsfeld einer Ein- und Ausgabeeinrichtung 3 bzw. 3' zur Anzeige gebrachte Informationsansicht, wobei Betriebszustände fernwart-, überwach- und/oder -bedienbarer Notrufanlagen 1 bzw. Notrufendgeräte 2 in tabellarischer Form mittels aus den Betriebszuständen generierten Darstellungselementen gebildet sind. Dabei sind die einzelnen Darstellungselemente in Abhängigkeit einer Ihnen zugewiesenen Priorität oder des Störungsgrads und dergleichen, in verschiedenen Farben dargestellt (hier erkennbar an Schraffierungen und Fettdruck). Darüber hinaus erlaubt eine andersfarbige Darstellung verschiedener Informationsansichten einem Bedienpersonal unmittelbar die Erfassung der jeweiligen Ansicht, beispielsweise eine Trennung von Übersichts- und Detailinformationen.

Das Bedien- und Beobachtungsfeld der Ein- und Ausgabeeinrichtung 3 bzw. 3' bietet verschiedene Informationsansichten der angebundenen Notrufanlagen 1 bzw. Notrufendgeräte 2, um den Aufgaben der Fernwartung, -überwachung und/oder -bedienung gerecht zu werden.

Unabhängig von der gewählten Informationsansicht sind folgende Informationen ständig verfügbar:
- alle Notrufanlagen 1, verfügbar (online) oder nicht verfügbar (off-line)
- alle bekannten Störungen.

Ein schnelles Erfassen der Betriebszustände und ein einfaches Bedienkonzept wird durch den Einsatz der graphischen Darstellungssymbole, unterschiedlicher Farben sowie der Trennung von Übersichts- und Detailinformationen sichergestellt.

Die verschiedenen Informationsansichten sind an die Zugangsberechtigung zur Notrufanlage 1 bzw. deren Rechner 12 gekoppelt, d.h., dass einige Informationsansichten immer benutzt werden können, und man in andere nur über eine Passwortabfrage gelangt.

Alle Änderungen der Betriebszustände der Notrufanlagen 1 sowie der daran angeschlossenen Notrufendgeräte 2 durch das Bedienpersonal werden seitens des Rechners 12 der Notrufanlage 1 protokolliert.

Folgende Informationsansichten sind gemäß Ausführungsbeispiel vorgesehen:

### Sicht 1: Zustand einer Notrufanlage

### (nicht passwortgeschützt)

Der Gesamtzustand einer Notrufanlage wird durch Auswahl einer Autobahnmeisterei in tabellarischer Form dargestellt. Diese Sicht erlaubt keinen Eingriff in das System und ist immer verfügbar. Folgende Parameter werden dargestellt:
- Zustand der Baugruppen
- Aktive Notrufsäulen
- Leitungsstörungen der Notrufsäulen
- Verbindungszustand der NF-Verbindungen (Sprachverbindungen)
- Zustand der Störmeldekontakte
- deaktivierte Notrufsäulen

### Sicht 2: Notrufanlagen-Management

### (passwortgeschützt)

Diese Sicht erlaubt die Parametrierung einer Notrufanlage und ist autorisierten Fachkräften vorbehalten.

### Sicht 3: Instandhaltungsbetrieb

### (passwortgeschützt)

Diese Sicht erlaubt die Notrufbearbeitung für ausgewählte Notruflinien und ist autorisierten Fachkräften vorbehalten.

### Sicht 4: Datenbank

### (passwortgeschützt)

Diese Sicht erlaubt die Personalverwaltung zur Störungsbeseitigung und die Konfiguration der Fehlerbehandlung und ist autorisierten Fachkräften vorbehalten.

### Sicht 5: Zugangsberechtigung

### (passwortgeschützt)

Diese Sicht erlaubt die Konfiguration der Zugangsberechtigung zum Rechner 12 der Notrufanlage und ist autorisierten Fachkräften vorbehalten.

### Sicht 6: Vertretungsbetrieb

### (nicht passwortgeschützt)

Die Umschaltung/Rückschaltung vom und zum Vertretungsbetrieb wird in dieser Sicht vorgenommen. Diese Sicht erlaubt keinen Eingriff in das System der Notrufanlage.

### Sicht 7: Bearbeitete Störmeldungen

### (nicht passwortgeschützt)

Diese Sicht zeigt alle eingelaufenen Störmeldungen aller angebundenen Notrufanlagen und Notrufendgeräte an und wird immer parallel zu einer frei wählbaren Sicht angezeigt.

Die Ein- und Ausgabeeinrichtungen 3, 3' kommunizieren mit den Rechnern 12 der Notrufanlagen 1 und anderen Ein- und Ausgabeeinrichtungen über eine Netzwerkverbindung 4, 5. Als Ausgang der Ein- und Ausgabeeinrichtungen 3, 3' dienen zwei X.21-Schnittstellen (Stern-/Ringschaltung). Aufgrund der Netzwerktopologie (Stern/Ringschaltung) ist nicht immer eine direkte Anschaltung einer Ein- und Ausgabeeinrichtung 3, 3' an einen Koppelrechner möglich (vgl. FIG 2).

Die Durchschaltung der Verbindungen erfolgt über PCM oder AUSA TK-Anlagen mit den entsprechenden Baugruppen.

Bekommt eine Ein- und Ausgabeeinrichtung 3, 3' zu einem Rechner 12 einer Notrufanlage keine Verbindung, oder wird diese nach erfolgreichem Aufbau gestört, wird die betreffende Ein- und Ausgabeeinrichtung als offline gekennzeichnet und ein Fehler angezeigt.

Auch eine Kommunikation zwischen den Ein- und Ausgabeeinrichtungen zur Umschaltung und Übernahme von Vertretungen ist über dieses Protokoll vorgesehen. Die Übernahme einer Vertretung muss grundsätzlich quittiert werden.

Die Rechner 12 der Notrufanlagen 1 und die Ein- und Ausgabeeinrichtungen 3, 3' stellen TC/IP Serverdienste bereit. Diese Dienste können von der Ein- und Ausgabeeinrichtung 3 als Client benutzt werden.

Folgende Dienste stehen zur Verfügung:

### 1. Rechner Standardzugang

Dieser Dienst kann von Ein- und Ausgabeeinrichtungen ohne besondere Sicherheitsvorkehrungen benutzt werden. Er dient zur Abfrage des Zustandes einer Notrufanlage und zur Übertragung von Störmeldungen. Über diesen Dienst können keine Veränderungen im System der Notrufanlage vorgenommen werden.

### 2. Rechner Notrufanlagen Management und Wartungsbetrieb

Dieser Dienst erlaubt einen Eingriff in die Notrufanlage und verlangt deshalb ein Kennwort bei der Anmeldung. Nur im System der Notrufanlage eingetragene Benutzer auf bestimmten Ein- und Ausgabeeinrichtungen können diesen Dienst benutzen.

### 3. Rechner Zugangskonfiguration und Personaldatenbank

Dieser Dienst erlaubt eine Zugangskonfiguration zum Rechner der Notrufanlagen und die Verwaltung der Personaldatenbank für Störungen. Der Zugang wird über ein Kennwort geschützt.

### 4. Ein- und Ausgabeeinrichtungen Vertretung

Dieser Dienst wird von jeder Ein- und Ausgabeeinrichtung zur Verfügung gestellt und dient zur Umschaltung/Rückschaltung von Vertretungsfunktionen. Für diesen Dienst sind keine weiteren Sicherheitsvorkehrungen vorgesehen.

Die Ein- und Ausgabeeinrichtungen sind so eingerichtet, dass sich nach Start des jeweiligen Rechners zunächst ein Benutzer bei dem Betriebssystem, vorwiegend Windows NT, anmelden muss. Nach Start des Verfahrens steht ein System mit der Grundfunktionalität (Informationsansichten für Zustands- und Störanzeige auf die verbundenen Notrufanlagen zur Verfügung. Die erweiterten Informationsansichten für das Notrufanlagen-Management, den Wartungsbetrieb und die Pflege der Datenbank stehen erst nach einer erweiterten Anmeldung mit Passwortabfrage beim Rechner der jeweiligen Notrufanlage zur Verfügung. Die Zugangs- und Benutzerrechte werden auf dem Rechner gehalten und können sich auf mehrere Personen und Ein- und Ausgabeeinrichtungen verteilen. Die Konfiguration der Zugangsberechtigungen erfolgt über die Ein- und Ausgabeeinrichtungen durch den jeweiligen Betreiber.

Die Umschaltung zwischen den Ein- und Ausgabeeinrichtungen auf Vertretungsbetrieb(24h-Zentrale) erfolgt direkt über das AUSA/PCM Netz und wird bei der Übergabe quittiert. Hat das Vertretungssystem einen Zugang zum Rechner der Notrufanlage erhalten, kann das Hauptsystem die Verbindung trennen.

Daten, die auf der Festplatte der Ein- und Ausgabeeinrichtung gespeichert werden, können bei Bedarf durch den Bediener auf Langzeitspeichermedien (DAT, ZIP, CD und dergleichen) gesichert werden. Mitgeschnittene Daten werden automatisch nach einer einstellbaren Anzahl von Tagen gelöscht.

Die Ein- und Ausgabeeinrichtung gestattet die Fernbedienung und Überwachung der Notrufanlage, wobei der Zugriff auf die Notrufanlage klassifiziert wird. Ein höher klassifizierter Zugang beinhaltet automatisch alle untergeordneten Zugriffe. Folgende Zugriffsmöglichkeiten sind gegeben:

### 1. Standardzugang

Für diesen Zugang erfolgt keine Passwortabfrage seitens des Rechners der Notrufanlage. Der Zugang kann von mehreren Ein- und Ausgabeeinrichtungen parallel erfolgen.

Der Rechner der Notrufanlage überträgt registrierte Störungen sofort beim Auftreten an die angemeldeten Ein- und Ausgabeeinrichtungen. Die Fernmeldefachkräfte können über eine Eingabemaske den Bearbeitungsverlauf eines Fehlers dokumentieren (z.B. Fehler quittieren, Fehler behoben in X Stunden, Fehler behoben und quittiert usw.). Darüber hinaus können Störungen, welche das System nicht automatisch erkennt, manuell eingegeben werden.

Die Zustände der Systemteile werden tabellarisch mit graphischen Symbolen in einer Form angezeigt, in der die Zuordnung eines Systemteils zu einer Notruflinie und Autobahnmeisterei gut zu erkennen ist. Das Anzeigen von Detailinformationen (Autobahn, Autobahnkilometer, Richtung, zugeordnete Störungsstelle, Telefonnummer usw.) ist jederzeit möglich. Alle Störungen im System heben sich deutlich von der Gesamtübersicht ab.

Folgende Systemkomponenten werden vom Rechner der Notrufanlage überwacht und seitens der Ein- und Ausgabeeinrichtungen mit Ihrem Status angezeigt.

### - Störungen Baugruppen

Defekte Baugruppen der Notrufanlage werden der Ein- und Ausgabeeinrichtung als Störung gemeldet und müssen mit einem Status (quittiert, in Arbeit, bekannt, Info) versehen werden.

### - Zustand NF-Verbindungen

Die Adaptionsvorrichtungen 10 der Notrufanlage können Sprachverbindungen (NF-Verbindungen) zu Call Center, Wartungsfernsprecher und Polizeifernsprecher aufbauen. Die aktuell bestehenden Sprachverbindungen werden der Ein- und Ausgabeeinrichtung als aktiv gemeldet und müssen nicht quittiert werden.

### - Störungen Notrufendgeräte

Leitungsstörungen der Notrufendgeräte können von den Adaptionsvorrichtungen direkt erkannt und klassifiziert werden, beispielsweise
- Säulenstörung von der Säule gemeldet
- Kommunikationsstörung zwischen Säule und Adaptionsvorrichtung (Daten).

Bei Notrufsäulen, z.B. vom Typ AFS80 der Firma Siemens, können Kommunikationsstörungen durch ungültige Kennungen im MFV-Code (Säulenkennung, Autobahnkilometer) erkannt werden. Die Erkennung setzt allerdings eine funktionstüchtige und betätigte Säule voraus. Gestörte Leitungen werden der Ein- und Ausgabeeinrichtung als Störung gemeldet und müssen mit einem Status (quittiert, in Arbeit, bekannt, Info) versehen werden.

### - Zustand aktive Notrufendgeräte

Alle aktiven Notrufsäulen werden mit Ihrem Zustand erfaßt, der Ein- und Ausgabeeinrichtung als aktiv gemeldet und müssen nicht quittiert werden.

### - Zustand Störmeldekontakte

Die Notrufanlagen der Autobahnmeistereien stellen diverse Störmeldekontakte bereit (Ein- und Ausgänge). Der Rechner der Notrufanlage erhält über die Eingangskontakte Kenntnis von Störungen der Notrufanlage und kann über Störmeldeausgänge Meldelampen als Störungsanzeige ansteuern.

Störungen werden der Ein- und Ausgabeeinrichtung als Störung gemeldet und müssen mit einem Status (quittiert, in Arbeit, bekannt, Info) versehen werden.

### 2. Zugang Notrufanlagen-Management

Dieser Zugang wird vom Rechner der Notrufanlage durch eine Benutzerkennung geschützt. Der Zugang kann nur von einer Ein- und Ausgabeeinrichtung zu einer Zeit erfolgen. Der Zugang ist autorisierten Fachkräften vorbehalten, da er einen Eingriff in das System erlaubt. Folgende Parameter können über diesen Zugang manipuliert werden:
- Angabe der Verbindungen für die einzelnen Notrufendgeräte
- Anzahl angeschlossener Notrufendgeräte
- Anzahl angeschlossener Notrufendgeräte
- Telefonnummern der S0-Gateway-Teilnehmer
- Bezeichnung der Notrufanlage
- Zuordnung der einzelnen Verbindungen
- Zuordnung der Notrufanlage
- Deaktivierung von Notrufendgeräten (z.B. Baustelle, bekannte Störung)
- Manuelle Eingabe von Störungen welche in das Störungsmanagement der Notrufanlage einfließen.

### 3. Zugang Wartungsbetrieb

Dieser Zugang wird vom Rechner durch eine Benutzerkennung geschützt. Der Zugang kann nur von einer Ein- und Ausgabeeinrichtung zu einer Zeit erfolgen. Der Zugang ist autorisierten Fachkräften vorbehalten. Im Normalbetrieb werden Notrufe der Notrufanlage in der Autobahnmeisterei zum Call Center geschaltet und in diesem abgearbeitet. Verbindungen können mit diesem Zugang vom Call Center weiter geschaltet werden. Auf der Ein- und Ausgabeeinrichtung läuft dann für die umgeschalteten Verbindungen eine vereinfachte Call Center Software. Es werden die Daten der aktuellen Notrufe angezeigt. Der Benutzer der Ein- und Ausgabeeinrichtung kann die Notrufe entgegennehmen und bearbeiten. Die Sprachverbindung wird zwischen Notrufendgerät und Ein- und Ausgabeeinrichtung hergestellt. Der Benutzer erhält die Möglichkeit, den Notruf zum Call Center zurückzuschalten. Auch im Wartungsbetrieb kann zwischen mehreren Notrufen an einer Verbindung hin- und hergeschaltet werden.

Es ist jederzeit möglich von der Ein- und Ausgabeeinrichtung eine Sprachverbindung zum Call Center aufzubauen.

### 4. Zugang Personaldatenbank für Störungsbeseitigung

Dieser Zugang wird vom Rechner der Notrufanlage geschützt. Der Zugang kann nur von einer Ein- und Ausgabeeinrichtung zu einer Zeit erfolgen. Der Zugang ist autorisierten Fachkräften vorbehalten.

Der Rechner der Notrufanlage beinhaltet eine Datenbank, die zur Verwaltung von Personal für die Störungsbeseitigung dient. Einzelne Störungen können anzurufenden Personen zugeordnet werden. Außerdem kann jeder Störungsart eine eigene besondere Bearbeitung durch den Bediener (quittieren, nur Anzeigen usw.) zugewiesen werden. In der Störungsanzeige auf der Ein- und Ausgabeeinrichtung können diese Informationen zu jedem Fehler abgerufen werden.

### 5. Zugang Benutzerkonfiguration

Dieser Zugang wird vom Rechner der Notrufanlage durch eine Benutzerkennung geschützt. Der Zugang kann nur von einer Ein- und Ausgabeeinrichtung zu einer Zeit erfolgen. Der Zugang ist autorisierten Fachkräften vorbehalten. Über diesen Zugang wird für jede Notrufanlage eine detaillierte Konfiguration der Zugangsberechtigungen zu einem Rechner der Notrufanlage vorgenommen. Die Konfiguration unterscheidet nach Ein- und Ausgabeeinrichtungen und Personen.

Eine Standardkonfiguration sieht folgendermaßen aus:

| Ein- und Ausgabeeinrichtung | Benutzer | Zugriffsrechte auf Notrufanlage |
|---|---|---|
| 1 (Hauptbetrieb) | Benutzer A | Vollzugriff |
| 1 (Hauptbetrieb) | Benutzer B | Vollzugriff |
| 2 (Vertretungsbetrieb) | Benutzer C | Standardzugriff |
| 2 (Vertretungsbetrieb) | Benutzer D | Standardzugriff |

### 6. Anmelden und Abmelden im Netzwerk

Beim Anmelden im Netzwerk erfolgt von allen angeschlossenen Autobahnmeistereien ein vollständiger Datenabgleich zur Ein- und Ausgabeeinrichtung. Während des Betriebes werden nur noch die in den Notrufanlagen aufgetretenen Änderungen (Störungen, Zustände) übermittelt.

Beim Abmelden vom Netzwerk muss gewährleistet sein, dass ein Vertretungssystem (24h-Zentrale) die Überwachung der Notrufanlagen übernimmt.

## Patentansprüche

1. Verfahren zur Fernwartung, -überwachung und/oder -bedienung von in Notrufanlagen (1), insbesondere Autobahnnotrufanlagen, gruppierten Notrufendgeräten (2), wie Fernsprecheinrichtungen, Notrufsäulen und dergleichen, insbesondere zur Anzeige und Weiterleitung von Alarmmeldungen aus einem Verbund von mehreren in Autobahnnotrufanlagen gruppierten Notrufendgeräten, wobei die Betriebszustände einzelner Notrufanlagen (1) und/oder einzelner Notrufendgeräte (2) über wenigstens eine Kommunikationsverbindung (4,5) seitens einer Ein- und Ausgabeeinrichtung (3,3') erfasst und in vorgebbaren Informationsansichten mittels aus den Betriebszuständen generierter Darstellungselemente in einem Bedien- und Beobachtungsfeld zur Anzeige gebracht werden, wobei wenigstens eine der folgenden Informationsansichten zur Anzeige gebracht wird, und zwar in einer ersten Sicht wenigstens ein Zustand einer Notrufanlage oder eines Notrufendgerätes und/oder in einer zweiten Sicht ein Notrufanlagen- oder Notrufendgeräte-Management und/oder in einer dritten Sicht ein Instandhaltungsbetrieb und/oder in einer vierten Sicht eine Datenbank und/oder in einer fünften Sicht eine Zugangsberechtigung und/oder in einer sechsten Sicht ein Vertretungsbetrieb und/oder in einer siebten Sicht bearbeitete Störmeldungen.

2. Verfahren nach Anspruch 1, **dadurch gekennzeichnet, dass** die Darstellungselemente graphische Darstellungssymbole umfassen.

3. Verfahren nach Anspruch 1 oder Anspruch 2, **dadurch gekennzeichnet , dass** die Darstellungselemente unterschiedliche Farben aufweisen.

4. Verfahren nach einem der Ansprüche 1 bis 3, **dadurch gekennzeichnet, dass** in den Informationsansichten Übersichts- und Detailinformationen voneinander getrennt zur Anzeige gebracht werden.

5. Verfahren nach einem der vorhergehenden Ansprüche, **dadurch gekennzeichnet, dass** die Betriebszustände in einer Informationsansicht in tabellarischer Form zur Anzeige gebracht werden.

6. Verfahren nach einem der Ansprüche 1 bis 5, **dadurch gekennzeichnet, dass** eine Fernwartung, -überwachung und/oder -bedienung erst nach Überprüfung einer Zugangsberechtigung ermöglicht wird.

7. Verfahren nach Anspruch 6, **dadurch gekennzeichnet, dass** die Zugangsberechtigung von der Informationsansicht abhängig ist.

8. Verfahren nach einem der Ansprüche 1 bis 7, **dadurch gekennzeichnet, dass** die Kommunikationsverbindung (5) über wenigstens ein Telekommunikationsnetzwerk aufgebaut wird.

9. Verfahren nach einem der Ansprüche 1 bis 8, **dadurch gekennzeichnet, dass** für die Kommunikationsverbindung (4) eine Standleitung verwendet wird.

10. Verfahren nach einem der vorhergehenden Ansprüche, **dadurch gekennzeichnet, dass** für die Kommunikationsverbindung eine Twisted-Pair-Verbindung, vorzugsweise unter Verwendung von TCP/IP eingesetzt wird.

11. Verfahren nach einem der vorhergehenden Ansprüche, **dadurch gekennzeichnet, dass** die Betriebszustände, Wartungs-, Überwachungs- und/oder Bedieneingaben protokolliert werden, vorzugsweise seitens der Ein- und Ausgabeeinrichtung (3,3'), besonders vorzugsweise seitens der entsprechenden Notrufanlage (1).

12. Ein- und Ausgabeeinrichtung zur Fernwartung, -überwachung und/oder -bedienung von in Notrufanlagen, insbesondere Autobahnnotrufanlagen, gruppierten Notrufendgeräten, wie Fernsprecheinrichtungen, Notrufsäulen und dergleichen, wobei die Betriebszustände einzelner Notrufanlagen und/oder einzelner Notrufendgeräte über wenigstens eine Kommunikationsverbindung seitens der Ein- und Ausgabeeinrichtung erfassbar und in vorgebbaren Informationsansichten mittels aus den Betriebszuständen generierbarer Darstellungselemente in einem Bedien- und Beobachtungsfeld anzeigbar sind.

13. Ein- und Ausgabeeinrichtung nach Anspruch 12, **dadurch gekennzeichnet, dass** diese von einem wenigstens eine Anzeigeeinrichtung und wenigstens eine Eingabeeinrichtung umfassenden Rechner bereitgestellt ist, vorzugsweise von einem PC mit Monitor und Tastatur.
